# EUROPEAN PATENT APPLICATION

(11) **EP 3 575 093 A1**
(43) Date of publication of application: **04.12.2019**
(21) Application number: 18175283.3
(22) Date of filing: 31.05.2018
(51) Int. Cl.: B41J 11/00, B65H 29/40, B65H 31/30, B65H 39/10, B65H 43/04, G06K 15/02, G06F 3/12, G03G 15/00

(54) **USER INTERFACE FOR VERIFYING CONSISTENCY IN INTERRUPTED SHEET STACKS**

(71) Applicant: OCE Holding B.V., 5914 CA Venlo (NL)
(72) Inventor: Lange, Martinus G.M., 5914CA Venlo (NL); DE JONG, Frederik, 5914CA Venlo (NL)
(74) Representative: OCE IP Department

(57) **Abstract**

When forming of a sheet stack is interrupted, for example by a paper jam, the sheet stack is divided into a first sheet stack portion (60A), which is ejected after the interruption, and a second sheet stack portion. As sheets may be removed in case of a paper jam, there is uncertainty whether the bottom sheet of the second sheet stack portion is consistent with the top sheet (S5) of the first sheet stack portion. The present invention allows the operator to easily verify this consistency by storing an identifier, such as the image printed thereon, for the bottom sheet (S6) of the second sheet stack portion (60B). This identifier is displayed at the request of an operator to identify the bottom sheet with the need for physically handling the second sheet stack portion.

## Description

### FIELD OF THE INVENTION

The present invention generally pertains to a sheet printing system and a method for printing and stacking sheets in such a system.

### BACKGROUND ART

Sheet printing systems generally comprise a stacker for rapidly forming neatly stacked piles of printed sheets. The stacks commonly form sets of sheets, each stack designated for a particular purpose, e.g. forming a book or shipping to a specific customer. Especially high productivity printing systems output large numbers of stacks per hour, each or most which are to serve a different purpose or client. Aside from keeping stacks separate, the internal consistency of a stack is important: no sheets should be missing from the stack. In practice, it may occur that the forming of a sheet stack is interrupted by for example a paper jam. In another example, the stack size may exceed the stacker's capacity or the stacking may be interrupted for reasons of maintenance or additional operations by the printing system. Generally these interruptions cause the stacker to output the sheet stack in portions. To maintain consistency, the bottom sheet of the latter stack portion should be consistent with the top sheet in the first stack portion as prescribed by the print job. While printing systems are generally configured to automatically resume printing to maintain consistency between stack portions, these measures in practice were found to be not full proof and inconsistent stacks are formed regardless. The problem is particularly apparent in larger, high productivity printing systems, wherein a large number of sheets simultaneously circulate through the printing system during operation.

### SUMMARY OF THE INVENTION

It is an object of the present invention to provide a simple manner of verifying the consistency between subsequent stack portions output by a stacker in a sheet printing system, particularly in a high productivity printing system.

In a first aspect of the present invention, a sheet printing system according to claim 1 is provided. The sheet printing system according to the present invention comprises:
- a stacker for forming stacks of printed sheets;
- a controller comprising a memory and configured for storing an identifier for a bottom sheet of a stack formed by the stacker on the memory;
- a user interface configured to receive a stack identification command;
wherein the printing system is configured to display the identifier for the bottom sheet of the stack upon receipt of the stack identification command, thereby visually identifying the bottom sheet of the stack.
When the stacking of a sheet stack is interrupted, the first sheet stack portion of said stack is ejected from the stacker, for example after a paper jam. Upon resumption of the printing and stacking process, the second sheet stack portion of said stack is formed as a new stack by the stacker. The controller stores an identifier, such as the page number or image for the bottom sheet of this second sheet stack portion on its memory. When the operator intends to rejoin the sheet stack portions by placing these atop on another, the operator can verify whether the bottom sheet of the second sheet stack portion is consistent with the top sheet of the first sheet stack portion by inputting the stack identification command to the controller. The controller consequently displays the identifier in a manner visual for the operator, for example on a screen or by printing an additional copy of said bottom sheet. The operator can thus easily identify the consistency of the sheet stack before rejoining the sheet stack portions. As such, the object of the present invention has been achieved.

In an embodiment, the controller is configured to receive a print job defining a sheet stack. The stacker is configured to output the sheet stack in portions by ejecting a first sheet stack portion to an output location before forming a second sheet stack portion. The controller is configured for storing an identifier for a bottom sheet of the second sheet stack portion. The print job defines a plurality of images for a plurality of sheets to be grouped together in a single sheet stack or pile. Stacking of said pile may be interrupted for example by a paper jam or by the stacker reaching its maximum capacity. In consequence, the stacker outputs the sheet stack defined by the print job in portions. The first sheet stack portion is ejected before the stack interruption by e.g. the paper jam. Stacking is then resumed in at the emptied stacking position. The first sheet printed subsequently forms the bottom sheet of the second sheet stack portion. The controller stores e.g. a digital copy of the image on said bottom sheet (or part thereof) as the identifier on the memory. The stacker continues forming the second sheet stack portion as prescribed by the print job while the identifier remains stored on the memory. Should the operator wish to identify the second sheet stack portion, then the identifier, for example in the form of a copy of the image on the bottom sheet, is displayed. The operator thus can with little extra effort determine whether the bottom sheet is the sheet following the top sheet of the first sheet stack portion in the order prescribed by the print job. The verification takes little time and effort and prevents faulty stacks from being processed further into faulty products. No extra handling of the sheet stack portions is required allowing these stack portions to preserve their neatly stacked appearance, which may be critical for further processing by finishing devices for book binding or other purposes.

In another embodiment, the controller is configured to start printing and stacking the second sheet stack portion, such that the first sheet printed after ejecting the first sheet stack portion forms the bottom sheet of the second sheet stack portion. Basically, the printing system downstream of the print heads is emptied from any remaining sheets en route to the respective stacker. The sheets may be removed by an operator or transport system. As such, the respective transport path section is free of sheets, such that the first sheet printed after the sheet stack ejection forms the bottom sheet in the stacker. This allows the digital image for said first printed sheet (or part thereof) to be reliably used as an identifier for the bottom sheet.

In a further embodiment, the controller is configured to store the identifier on the memory at least while the second sheet stack portion is formed by the stacker. The identifier is stored on the memory when the bottom sheet arrives at the stacker and remains stored at least while the second sheet stack portion is formed. Upon completion of the second sheet stack portion, the second sheet stack portion is ejected from the stacker and becomes accessible to the operator. The operator may then choose to access the memory by inputting the stack identification command allowing him to determine the identity of the bottom sheet and compare it to the top sheet of the first sheet stack portion. In a preferred embodiment, the identifier remains stored on the memory at least until ejection of the second sheet stack portion from the stacker.

In an embodiment, wherein the identifier comprises an image printed on the bottom sheet. As discussed previously, the image on the bottom sheet or part thereof forms an easy means for the operator to compare sheets to determine the sheet order. The displayed part of the image may e.g. comprise the page number or the image in its entirety may be shown. In an embodiment, one or more identifiers for at least one sheet directly preceding the bottom sheet may also be visualized. The user interface or printed copy then shows the stored identifier, but also an identifier for the sheet preceding it as prescribed by the print job. The preceding identifier should then match the top sheet of the first sheet stack portion. This makes verification even easier for the operator.

In another embodiment, the user interface comprises a display for displaying the identifier and/or wherein the sheet printing system is configured to print the identifier on an additional sheet, which sheet bypasses the stacker. The identifier is thus shown on a screen display or printed on an additional sheet at the request of the operator.

In a second aspect, the present invention provides a method for printing and stacking sheets in a printing system. The method comprising the steps of:
- a controller receiving a print job defining a sheet stack;
- a stacker stacking printed sheets in accordance with said print job;
- the stacker ejecting a first sheet stack portion of the sheet stack;
- the stacker starting a second sheet stack portion after ejecting the first sheet stack portion;
- a controller storing on a memory an identifier for identifying a bottom sheet of the second sheet stack portion;
- displaying the identifier.
The print job prescribes the sheet order in the stack. The stacking however is interrupted by e.g. a paper jam. The sheet stacker consequently ejects the first sheet stack portion before starting the stacking of the second sheet stack portion. An identifier, such as part of the image printed thereon, for the bottom sheet of the second sheet stack portion is stored on the controller's memory. When the two sheet stack portions need to be rejoined, the operator can easily verify the sheet order by displaying the identifier and comparing it to the printed top sheet of the first sheet stack.

In an embodiment, the controller stores the identifier on the memory for at least the duration of the step of stacking the second sheet stack portion. The identifier is preserved while the second sheet stack portion is formed such that upon its completion the operator can easily identify the bottom sheet and determine whether the first and second sheet stack portions are indeed complete.

In another embodiment, the method according to the present invention comprises the step of the controller receiving a stack identification command and based on said stack identification command displaying the identifier. The operator may access the memory by inputting the stack identification command to display the identifier. Thereby, the bottom sheet can be identified when desired, such as when the operator is present at the stacker. Preferably, the stack identification command is input via a user interface.

In a further embodiment, the step of displaying comprises displaying the identifier on a display of the user interface or printing the identifier on an additional sheet.

In an embodiment, the method according to the present invention further comprises the step of clearing a transport path between print heads and the stacker before the step of printing and stacking the second sheet stack portion, such that the first sheet printed after the step of ejecting the first sheet stack portion forms the bottom sheet in the second sheet stack portion. In case of a paper jam, sheets are removed from the transport path and the controller is unable to accurately track which sheet arrived at the stacker to form the top sheet of the first sheet stack portion. As the respective transport path is then substantially free of sheets destined for the respective stacker, the first sheet printed after the stack ejection will be the bottom sheet of the second sheet stack portion. Storing and displaying a digital copy of at least part of the image printed on said sheet thus provides an easy manner to help the operator identify the sheet stack.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying schematical drawings which are given by way of illustration only, and thus are not limitative of the present invention, and wherein:
Fig. 1 is a schematic side view of a sheet printing system according to the present invention;
Fig. 2A is a schematic representation of the controller of the sheet printing system according to the present invention during execution of an embodiment of the method according to the present invention;
Fig.2B is a schematic representation of the stacking process in according with the method schematically shown in Fig. 2A;
Fig. 3 is a flow chart showing the steps of another embodiment of the method according to the present invention.

### DETAILED DESCRIPTION OF THE DRAWINGS

The present invention will now be described with reference to the accompanying drawings, wherein the same reference numerals have been used to identify the same or similar elements throughout the several views.

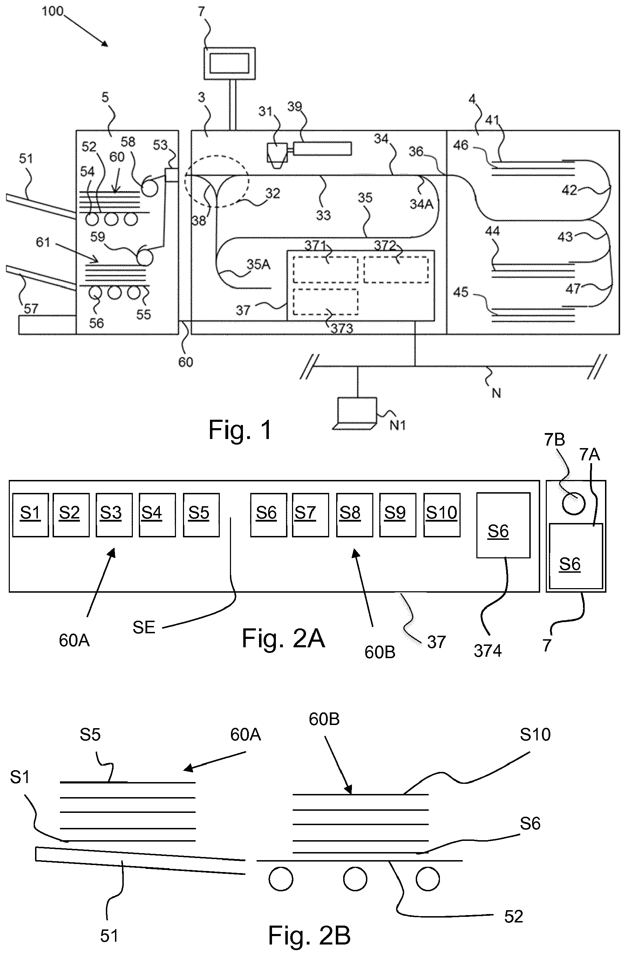

FIG. 1 shows schematically an embodiment of a printing system 1 according to the present invention. The printing system 1, for purposes of explanation, is divided into an output section 5, a print engine and control section 3, a local user interface 7 and an input section 4. While a specific printing system is shown and described, the disclosed embodiments may be used with other types of printing system such as an ink jet print system, an electrographic print system, etc.

The output section or stacker assembly 5 comprises a first output holder 52 for holding printed image receiving material, for example a plurality of sheets. The output section 5 may comprise a second output holder 55. While 2 output holders are illustrated in FIG. 1, the number of output holders may include one, two, three or more output holders. In FIG. 1 each output location holder 52, 55 is provided with a stacker 58, 59 for forming sheet stacks 60, 61 at the respective output holders 52, 55. Each stacker 58, 59 may for example comprise a flipping wheel as described in European Patent EP 1762523 B1 or EP 2776352 B1, which the description of which is herein incorporated by reference. The printed image receiving material is transported from the print engine and control section 3 via an inlet 53 to the output section 5. When a stack ejection command is invoked by the controller 37 for the first output holder 52, first guiding means 54 are activated in order to eject the plurality of sheets 60 in the first output holder 52 outwards to a first external output holder 51. When a stack ejection command is invoked by the controller 37 for the second output holder 55, second guiding means 56 are activated in order to eject the plurality of sheets 61 in the second output holder 55 outwards to a second external output holder 57.

The output section 5 is digitally connected by means of a cable 60 to the print engine and control section 3 for bi-directional data signal transfer.

The print engine and control section 3 comprises a print engine and a controller 37 for controlling the printing process and scheduling the plurality of sheets in a printing order before they are separated from input holder 44, 45, 46.
The controller 37 is a computer, a server or a workstation, connected to the print engine and connected to the digital environment of the printing system, for example a network N for transmitting a submitted print job to the printing system 1. In FIG. 1 the controller 37 is positioned inside the print engine and control section 3, but the controller 37 may also be at least partially positioned outside the print engine and control section 3 in connection with the network N in a workstation N1.
The controller 37 comprises a print job receiving section 371 permitting a user to submit a print job to the printing system 1, the print job comprising image data to be printed and a plurality of print job settings. The controller 37 comprises a print job queue section 372 comprising a print job queue for print jobs submitted to the printing system 1 and scheduled to be printed. The controller 37 comprises a sheet scheduling section 373 for determining for each of the plurality of sheets of the print jobs in the print job queue an entrance time in the paper path of the print engine and control section 3, especially an entrance time for the first pass and an entrance time for the second pass in the loop in the paper path according to the present invention. The sheet scheduling section 373 will also be called scheduler 373 hereinafter.

The sheet scheduling section 373 takes the length of the loop into account. The length of the loop corresponds to a loop time duration of a sheet going through the loop dependent on the velocity of the sheets in the loop. The loop time duration may vary per kind of sheet, i.e. a sheet with different media properties.

Resources may be recording material located in the input section 4, marking material located in a reservoir 39 near or in the print head or print assembly 31 of the print engine, or finishing material located near the print head or print assembly 31 of the print engine or located in the output section 5 (not shown).

The paper path comprises a plurality of paper path sections 32, 33, 34, 35 for transporting the image receiving material from an entry point 36 of the print engine and control section 3 along the print head or print assembly 31 to the inlet 53 of the output section 5. The paper path sections 32, 33, 34, 35 form a loop according to the present invention. The loop enables the printing of a duplex print job and/or a mix-plex job, i.e. a print job comprising a mix of sheets intended to be printed partially in a simplex mode and partially in a duplex mode.

The print head or print assembly 31 is suitable for ejecting and/or fixing marking material to image receiving material. The print head or print assembly 31 is positioned near the paper path section 34. The print head or print assembly 31 may be an inkjet print head, a direct imaging toner assembly or an indirect imaging toner assembly.

While an image receiving material is transported along the paper path section 34 in a first pass in the loop, the image receiving material receives the marking material through the print head or print assembly 31. A next paper path section 32 is a flip unit 32 for selecting a different subsequent paper path for simplex or duplex printing of the image receiving material. The flip unit 32 may be also used to flip a sheet of image receiving material after printing in simplex mode before the sheet leaves the print engine and control section 3 via a curved section 38 of the flip unit 32 and via the inlet 53 to the output section 5. The curved section 38 of the flip unit 32 may not be present and the turning of a simplex page has to be done via another paper path section 35.

In case of duplex printing on a sheet or when the curved section 38 is not present, the sheet is transported along the loop via paper path section 35A in order to turn the sheet for enabling printing on the other side of the sheet. The sheet is transported along the paper path section 35 until it reaches a merging point 34A at which sheets entering the paper path section 34 from the entry point 36 interweave with the sheets coming from the paper path section 35. The sheets entering the paper path section 34 from the entry point 36 are starting their first pass along the print head or print assembly 31 in the loop. The sheets coming from the paper path section 35 are starting their second pass along the print head or print assembly 31 in the loop. When a sheet has passed the print head or print assembly 31 for the second time in the second pass, the sheet is transported to the inlet 53 of the output section 5.

The input section 4 may comprise at least one input holder 44, 45, 46 for holding the image receiving material before transporting the sheets of image receiving material to the print engine and control section 3. Sheets of image receiving material are separated from the input holders 44, 45, 46 and guided from the input holders 44, 45, 46 by guiding means 42, 43, 47 to an outlet 36 for entrance in the print engine and control section 3. Each input holder 44, 45, 46 may be used for holding a different kind of image receiving material, i.e. sheets having different media properties. While 3 input holders are illustrated in FIG. 1, the number of input holders may include one, two, three or more input holders.

The local user interface 7 is suitable for displaying user interface windows for controlling the print job queue residing in the controller 37. In another embodiment a computer N1 in the network N has a user interface for displaying and controlling the print job queue of the printing system 1.

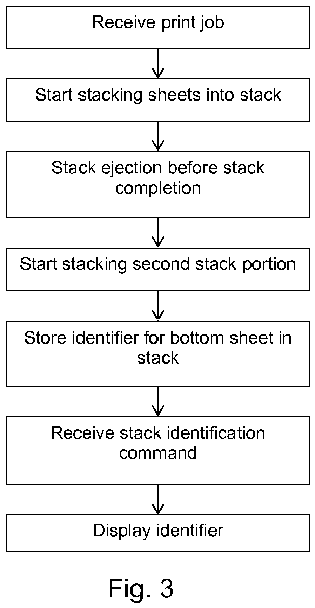

FIG. 2A and 2B schematically illustrate the method according to the present invention along with the flow chart in FIG. 3. A print job is transmitted to the controller 37. Said print job comprises image information S1-S10 for a plurality of sheets. The print job prescribes a predefined order of the images S1-S10. It will be appreciated that while FIG. 2A illustrates single side printed sheets, it is within the scope of the invention to apply duplex printed sheets as well. The image information in the latter case then contains front and back image information. The controller 37 processes the images S1-S10 in the print job for printing and the stacker 5 begins stacking the printed sheets with the images S1-S10.

During execution of the print job, stacking is interrupted, for example by a paper jam. Where possible, the transport system transports printed sheets to the stacker 5. The stacker 5 finalizes a first stack portion 60A which stack portion 60A is then ejected from to an output location 51 by means of an automated stack eject SE. Especially in case of a paper jam sheets may be removed from the printing system 100 in order to resume operations. The controller 37 attempts to reprint any removed sheets, but in practice the controller 37 is unable to always determine which sheets were removed and/or which sheets were comprised in the first sheet stack portion 60A. Especially, in larger printing systems, wherein the transport path length comprises a large number of sheet lengths, insufficient sensors or detectors are available to track the removal of sheets by an operator from all possible positions along the transport path. Hence, in case of a paper jam interrupting the sheet stacking, the operator is left in doubt whether the first sheet S6 in the second stack portion 60B consistently follows the last sheet S5 in the ejected first stack portion 60A. Lifting the second stack portion 60B could damage the sheets S6-S10 and misalign the sheets, removing the neatly stacked appearance of the stack 60B.

The present invention aims to resolve this by the controller 37 storing an identifier, for example the image S6 or page number, of the first or bottom sheet in the second stack portion 60B. Before ejection of the first stack portion 60A, the transport path, at least downstream of the print heads 31, was emptied, such that the first sheet S6 printed after said stack ejection SE forms the bottom sheet S6 of the second stack portion 60B.

The controller 37 comprises a memory 374, wherein the identifier for the bottom sheet S6 is temporarily stored. At least for the duration wherein the second sheet stack portion 60B is present in the stacker 5, the memory 374 retains the identifier. It will be appreciated that within the present invention, the controller 37 may comprise multiple memory positions for tracking multiple sheet stacks 60 or portions 60A-B thereof.

The printer system 100 further comprises a user interface 7 having a display 7A configured for displaying the identifier to the operator. The display 7A may for example be a screen on the local user interface 7 of the printing system 100 or a screen on a mobile device, such as a telephone or tablet. The user interface 7 further comprises input means for inputting a stack identification command to the controller 37. The input means 7B may be for example a button 7B on the user interface 7 or printing system 100 or any other suitable means for inputting information and/or commands to the printing system 100.

When the controller 37 receives the stack identification command from the input means 7B, the controller 37 communicates the stored identifier for the bottom sheet S6 to the operator. The identifier may comprise any suitable means to allow the operator to identify the bottom sheet S6. The identifier may e.g. comprise a page or sheet number of the bottom sheet S6 or at least part of the image printed thereon.

The controller 37 transmits the identifier from the memory 374 to a display, for example a screen of the user interface 7 such that the operator may easily and clearly determine the content printed on the bottom sheet S6 without handling the second stack portion 60B. In an embodiment, the controller 37 upon receipt of the stack identification command controls the print heads 7 to print the identifier on an additional sheet which sheet is outputted to one of the output locations 51, 57. In practice one of the output locations 51 will be occupied by the second stack portion 60B, such that the additional sheet is preferably outputted to a different output location 57.

In order to ensure that the first sheet printed after the stack ejection will be the bottom sheet in the second stack portion 60B, the controller 37 is configured to start printing and stacking the second stack portion 60B after the transport path downstream of the print heads 31 has been cleared. No sheets are then present between on the transport path between the print heads 31 and the respective flipping unit 58, 59 of the stacker assembly 5. Please note that the transport path may comprise one or more sheets destined for a different flipping unit 58, 59, said sheets not being part of the print job for first and second stack portions 60A, 60B. The clearing of the transport path may at least partially be performed by the printing system 100 by moving sheets to an output location 51, 57 or a waste bin. The operator may further remove jammed sheets if required. Additionally, the clearing may comprise the printing system 100 checking by means of one or more sheet detectors whether the respective parts of the transport path are clear. Said clearance may also include clearance input by the operator via the user interface 7.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.
Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, such a reference to a structural element encompasses a computer readable medium carrying such computer executable instructions.
Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.
The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A sheet printing system (100), comprising:
- a stacker (58, 59) for forming stacks (60, 60A, 60B) of printed sheets (S1-S10);
- a controller (37) comprising a memory (374) and configured for storing an identifier for a bottom sheet (S6) of a stack formed by the stacker (58, 59) on the memory (374);
- a user interface (7) configured to receive a stack identification command;
wherein the printing system (100) is configured to display the identifier for the bottom sheet (S6) of the stack upon receipt of the stack identification command, thereby visually identifying the bottom sheet (S6) of the stack (60, 60A, 60B).

2. The sheet printing system (100) according to claim 1, wherein:
- the controller (37) is configured to receive a print job defining a sheet stack (60);
- the stacker (58, 59) is configured to output the sheet stack (60) in portions by ejecting a first sheet stack portion (60A) to an output location (51, 57) before forming a second sheet stack portion (60B); and
- the controller (37) is configured for storing an identifier for a bottom sheet (S6) of the second sheet stack portion (60B).

3. The sheet printing system according to claim 2, wherein the controller (37) is configured to start printing and stacking the second sheet portion (60B), such that the first sheet (S6) printed after ejecting the first stack portion (60A) forms the bottom sheet (S6) of the second stack portion (60B).

4. The sheet printing system (100) according to claim 2 or 3, wherein the controller (37) is configured to store the identifier on the memory (374) at least while the second stack portion (60B) is formed by the stacker (58, 59).

5. The sheet printing system according to any of the previous claims, wherein the identifier comprises an image printed on the bottom sheet (S6).

6. The sheet printing system according to any of the previous claims, wherein the user interface comprises a display for displaying the identifier and/or wherein the sheet printing system is configured to print the identifier on an additional sheet, which sheet bypasses the stacker (58, 59).

7. A method for printing and stacking sheets in a printing system (100), the method comprising the steps of:
- a controller (37) receiving a print job defining a sheet stack (60);
- a stacker (58, 59) stacking printed sheets (S1-S10) in accordance with said print job;
- the stacker (58, 59) ejecting a first sheet stack portion (60A) of the sheet stack (60);
- the stacker (58, 59) starting a second sheet stack portion (60B) after ejecting the first sheet stack portion (60A);
- a controller (37) storing on a memory (374) an identifier for identifying a bottom sheet (S6) of the second sheet stack portion (60B);
- displaying the identifier.

8. The method according to claim 7, wherein the controller (37) stores the identifier on the memory (374) for at least the duration of the step of stacking the second sheet stack portion (60B).

9. The method according to claim 7 or 8, further comprising the step of the controller (37) receiving a stack identification command and based on said stack identification command displaying the identifier.

10. The method according to claim 9, wherein the stack identification command is input via a user interface (7).

11. The method according to any of the claims 7 to 10, wherein the step of displaying comprises displaying the identifier on a display (7A) of the user interface (7) or printing the identifier on an additional sheet.

12. The method according to any of the claims 7 to 11, further comprising the step of clearing a transport path between print heads (31) and the stacker (58, 59) before the step of printing and stacking the second sheet stack portion (60B), such that the first sheet printed after the step of ejecting the first sheet stack portion (60A) forms the bottom sheet (S6) in the second sheet stack portion (60B).
